# EUROPÄISCHE PATENTSCHRIFT

(11) **EP 0 580 615 B1**
(45) Veröffentlichungstag und Bekanntmachung des Hinweises auf die Patenterteilung: **29.11.1995**
(21) Anmeldenummer: 92906963.1
(22) Anmeldetag: 21.03.1992
(51) Int. Cl.: F16P 3/14

(54) **ÜBERWACHUNGSEINRICHTUNG FÜR EINE REGALGASSE**
DEVICE FOR MONITORING THE ALLEYWAYS BETWEEN SHELF UNITS IN WAREHOUSES
DISPOSITIF DE SURVEILLANCE POUR UN COULOIR DE RAYONNAGES

(30) Priorität: 18.04.1991 DE 4112728
(43) Veröffentlichungstag der Anmeldung: 02.02.1994
(73) Patentinhaber: Fahrion, Otmar, 70806 Kornwestheim (DE)
(72) Erfinder: Fahrion, Otmar, 70806 Kornwestheim (DE)
(74) Vertreter: Ostertag, Reinhard
(86) Internationale Anmeldenummer: EP9200628
(87) Internationale Veröffentlichungsnummer: WO9218803

(56) Entgegenhaltungen:
- EP-A- 0 220 361
- WO-A-87/04259
- DE-A- 3 208 901
- DE-C- 3 919 167

## Beschreibung

Die Erfindung betrifft eine Überwachungseinrichtung für eine Regalgasse mit Lichtschrankenanordnungen zur Verhütung von Unfällen, insbesondere zwischen Regalfahrzeugen und sich in der Regalgasse aufhaltender Personen.

Eine derartige Einrichtung ist aus der DE-C-39 19 167 bekannt. In Hochregallagern ist man zum Bedienen der höher gelegenen Regalfächer und zum Bewegen schwererer Gegenstände auf spezielle Regalfahrzeuge angewiesen. Kleinere Waren lassen sich leichter manuell in die Regalfächer legen und aus ihnen herausnehmen. Da der Fahrer eines Regalfahrzeuges hinter der Staplerführung und der Last oft keinen ausreichenden Überblick über die Regalgasse mehr hat, besteht die Gefahr von Zusammenstößen zwischen dem Regalfahrzeug und Personen, die manuelle Kommissionierarbeiten durchführen.

Um derartige Unfälle zu vermeiden, wurde schon vorgeschlagen, am Eingang einer jeder Regelgasse eine Schranke vorzusehen, die in Verbindung mit einer Lichtschranke und einer zugeordneten Elektronik gewährleistet, daß sich immer nur eine Person oder ein Fahrzeug in der Regalgasse aufhalten kann. Derartige Schranken behindern aber das Arbeiten erheblich, denn auch wenn die Regalgasse leer ist, muß ihr Öffnen abgewartet werden. Oft werden daher derartige Schranken vom Personal außer Betrieb genommen, um rascher arbeiten zu können. Außerdem ist bei diesen bekannten Überwachungseinrichtungen ein Zugang zur Regalgasse auch dann nicht möglich, wenn sich in der Regalgasse eine manuell kommissionierende Person befindet und die Regalgasse von einer zweiten, ebenfalls manuell arbeitenden, Person betreten werden soll.

Die Unfallgefahr in Regalgassen könnte man anders auch dadurch lösen, daß man für jedes Regalfahrzeug eine z.B. auf Ultraschallbasis arbeitende Überwachungseinrichtung vorsieht, die den unmittelbar vor dem Fahrzeug liegenden Raum auf fremde Objekte überwacht. Diese Möglichkeit hat aber den Nachteil, daß durch andere neben dem Fahrweg liegende Hindernisse viele Falschalarme erzeugt werden. Auch ist die Ausrüstung der verschiedenen Regalfahrzeuge mit einer solchen Überwachungseinrichtung mit höheren Kosten verbunden.

Durch die vorliegende Erfindung soll daher eine Überwachungseinrichtung für eine Regalgasse geschaffen werden, die den Zugang zu einer Regalgasse normalerweise nicht behindert, dann jedoch, wenn sich eine unzulässige Kombination von Regalfahrzeugen und/oder Personen in der Regalgasse aufhält, einen Alarm auslöst.

Diese Aufgabe ist erfindungsgemäß gelöst durch eine Überwachungseinrichtung gemäß Anspruch 1.

Bei der erfindungsgemäßen Überwachungseinrichtung erfolgt die Unterscheidung zwischen Personen und Regalfahrzeugen durch zwei Lichtschrankenanordnungen, die in unterschiedlicher Höhe angeordnet sind. Eine obere Lichtschrankenanordnung arbeitet in so großer Höhe, daß sie nur von den hohen Regalfahrzeugen unterbrochen werden kann. Eine untere Lichtschrankenanordung ist in solcher Höhe angebracht, daß sie auch durch in der Regalgasse laufende Personen unterbrochen wird. Beide Lichtschrankenanordnungen sind so ausgebildet, daß sie nicht nur die Tatsache der Unterbrechung sondern auch die Bewegungsrichtung des unterbrechenden Objektes melden. Dies kann z.B. durch zwei in Längsrichtung der Gasse beabstandete Lichtschranken erfolgen, deren Ausgangssignale über einen geeigneten Signalverknüpfungskreis ausgewertet werden. Die so verarbeiteten Ausgangssignale der Lichtschrankenanordnungen können dann direkt auf einen Auf/Ab-Zähler gegeben werden, dessen Zählerstand damit direkt der Anzahl in der Regalgasse befindlicher Regalfahrzeuge bzw. der Anzahl in der Regalgasse befindlichen Objekte ( = Fahrzeuge plus Personen) entspricht. Ein mit den Zählerständen beaufschlagter Überwachungskreis erzeugt dann gemäß einer ihm vorgegebenen Tabelle immer dann ein Alarmsignal, wenn eine unzulässige Kombination "Anzahl der Regalfahrzeuge zu Anzahl der Objekte" festgestellt wird.

Die erfindungsgemäße Überwachungseinrichtung läßt sich mit geringem technischem Aufwand auch an schon existierenden Regalgassen installieren. Schranken und ähnliche das Arbeiten behindernde Hindernisse werden nicht benötigt. Das Arbeiten in der Regalgasse ist solange völlig unbehindert, bis ein Alarm ausgelöst wird. In diesem in der Praxis nicht sehr häufigen Falle, muß dann der Fahrer des Regalfahrzeuge sein Fahrzeug anhalten, bis der Alarm von einer autorisierten Person nach Überprüfung der Situation gelöscht wurde.

Vorteilhafte Weiterbildungen der Erfindung sind in Unteransprüchen angegeben.

Bei einer Überwachungseinrichtung gemäß Anspruch 4 ist es bei breiten Regalgassen auch möglich, zwei nebeneinander in eine Regalgasse hineinlaufende oder diese verlassende Personen getrennt zu erfassen.

Eine Überwachungseinrichtung gemäß Anspruch 5 ermöglicht es, zwischen hintereinander laufenden Personen und Personen, die einen Gegenstand vor sich hertragen, zu unterscheiden.

Die Weiterbildung der Erfindung gemäß Anspruch 6 gestattet ferner zu unterscheiden zwischen einer Person und einem durch eine Person geschobenen Kommissionierwagen.

Mit der Weiterbildung der Erfindung gemäß Anspruch 10 erhält man ein zwangsweises Immobilisieren der Regalfahrzeuge bei festgestellten Gefahrensituationen.

Bei einer Überwachungseinrichtung gemäß Anspruch 11 haben die sich im Regal bewegenden Regalfahrzeuge und Personen einen stetigen Überblick über diejenigen Regalgassen, für die gegenwärtig eine Zutrittsmöglichkeit besteht, und über die Regalgassen, die momentan aus Sicherheitsgründen gesperrt sind.

Mit der Weiterbildung der Erfindung gemäß Anspruch 12 wird erreicht, daß die Regalfahrzeuge und Kommissionierungsarbeiten durchführenden Personen zur Durchführung der ihnen übertragenen Kommissionierungsarbeiten so geführt werden, daß nur geringe Wartezeiten an aus Sicherheitsgründen gesperrten Regalgassen anfallen.

Nachstehend wird die Erfindung anhand von Ausführungsbeispielen unter Bezugnahme auf die Zeichnung näher erläutert.

In dieser zeigen:
- Figur 1:: eine Stirnansicht zweier Zeilen eines Hochregallagers zusammen mit einem Blockschaltbild einer Regalgassen-Überwachungseinrichtung;
- Figuren 2 bis 5:: abgewandelte Geometrien für die Lichtschrankenanordnungen der Regalgassen-Überwachungseinrichtung nach Figur 1; und
- Figur 6:: ein Blockschaltbild eines Regallager-Leitstandes zusammen mit einem Regalfahrzeug.

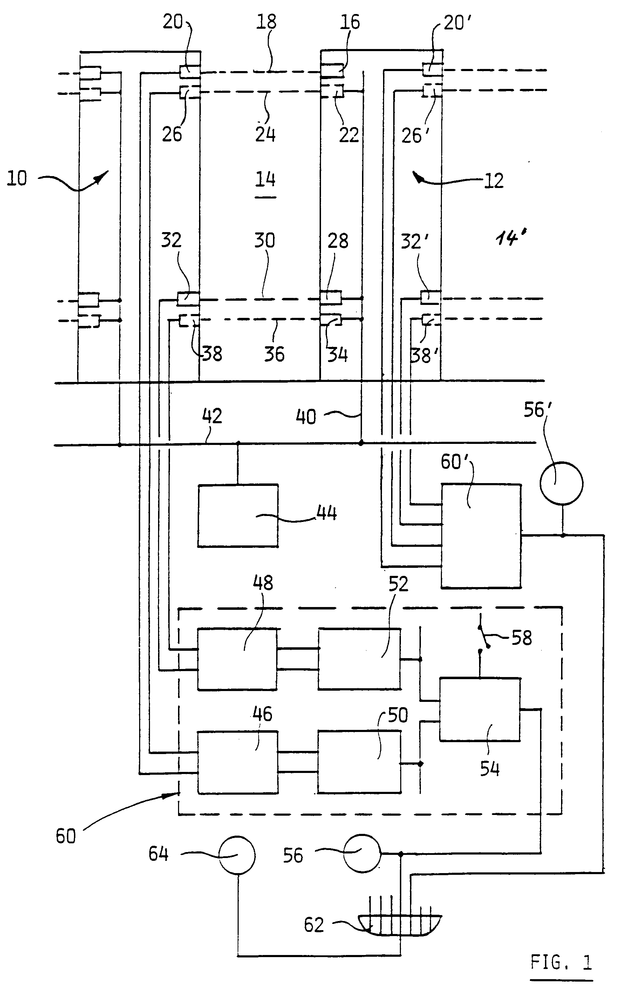

In Figur 1 sind mit 10 und 12 zwei Regalzeilen eines Hochregallagers bezeichnet, die nach links und rechts offene Fächer haben und eine dazwischen liegende Regalgasse 14 vorgeben.

Im oberen linken Bereich der Regalzeile 12 ist eine Sendeeinheit 16 vorgesehen, die einen Lichtstrahl 18 abgibt. Letzterer wird von einer gegenüberliegenden Empfängereinheit 20 aufgefangen, die im oberen rechten Abschnitt der Regalzeile 10 angeordnet ist.

Hinter der Sendeeinheit 16 liegend, und zur besseren Darstellbarkeit etwas nach unten versetzt, ist eine weitere Sendeeinheit 22 vorgesehen, die einen Lichtstrahl 24 abgibt. Dieser trifft auf eine Empfängereinheit 26, die auf der Regalzeile 10 vorgesehen ist.

Im unteren Bereich der Regalgasse 14 sind zwei weitere Lichtschranken analog vorgesehen, die eine Sendeeinheit 28, einen Lichtstrahl 30, eine Empfängereinheit 32 sowie eine Sendeeinheit 34, einen Lichtstrahl 36 und eine Empfängereinheit 38 umfassen, wobei die Anordnung analog wie bei den beiden oberen Lichtschranken ist, mit dem einzigen Unterschied, daß die Lichtstrahlen 30, 36 etwa in einer Höhe von 80 cm verlaufen, während die Lichtstrahlen 18, 24 in einer Höhe von etwa 2,20 m verlaufen.

Die Sendeeinheiten 16, 22, 28, 34 sind über eine Leitung 40 mit einer Speiseschiene 42 verbunden, die von einer Erregerschaltung 44 her mit gepulstem Gleichstrom oder Wechselstrom beaufschlagt ist, wie zur elektronischen Fremdlichtunterdrückung in Lichtschranken üblich.

Die Empfängereinheiten 20, 26 sind mit den Eingängen eines Signalverarbeitungskreises 46 verbunden, die Ausgänge der Empfängereinheiten 32 und 38 entsprechend mit den Eingängen eines Signalverarbeitungskreises 48. Die beiden Signalverarbeitungskreise 46, 48 arbeiten grob gesprochen so, daß sie aus der zeitlichen Abfolge der Unterbrechung der Lichtstrahlen feststellen, ob sich das die Lichtstrahlen 18, 24 bzw. die Lichtstrahlen 30, 36 unterbrechende Objekt in die Regalgasse hinein oder aus dieser heraus bewegt. Entsprechend stellen die Signalverarbeitungskreise 46, 48 an ihrem einen Ausgang ein Richtungssignal bereit, welches auf die "+/-"-Steuerklemme eines zugeordneten Auf/Ab-Zählers 50 bzw. 52 gegeben wird. Dessen Zählklemme "C" erhält jeweils bei Unterbrechung des entsprechenden Lichtstrahlpaares einen Zählimpuls.

Damit entspricht der Stand des Auf/Ab-Zählers 50 der Anzahl der sich in der Regalgasse aufhaltenden Regalfahrzeuge. Der Stand des Auf/Ab-Zählers 52 entspricht der Gesamtzahl in der Regalgasse befindlicher sich bewegender Objekte (Regalfahrzeuge plus Personen).

An die Ausgänge der Auf/Ab-Zähler ist ein Überwachungskreis 54 angeschlossen, der die beiden Zählerstände auswertet. Durch Abziehen des Standes des Auf/Ab-Zählers 50 vom Stand des Auf/Ab-Zählers 52 ermittelt der Überwachungskreis 54 die Anzahl in der Regalgasse befindlicher Personen, welche beim Betreten und Verlassen der Regalgasse nur die unteren Lichtstrahlen 30, 34 unterbrechen.

Im Überwachungskreis 54 ist durch entsprechende Programmierung eine Tabelle abgelegt, die sämtliche aus Sicherheitsgründen nicht tolerierbaren Kombinationen der Stände der Auf/Ab-Zähler angibt. Bei Antreffen einer solchen unzulässigen Zählerstandskombination gibt der Überwachungskreis 54 an seinem Ausgang ein Signal ab, durch welches eine akustische Alarmeinheit 56 bleibend eingeschaltet wird. Ein Ausschalten des Alarmes ist nur durch Betätigen eines Rückstellschalters 58 möglich, der mit dem Alarm-Haltekreis des Überwachungskreises 54 verbunden ist und nur durch eine autorisierte Person betätigt werden kann und hierzu beispielsweise als Schlüsselschalter ausgebildet ist.

Die gesamte der Regalgasse 14 zugeordnete Überwachungsschaltung ist in Figur 1 mit 60 bezeichnet. Eine ähnliche Überwachungsschaltung 60′ ist für die benachbarte Regalgasse 14′ vorgesehen, die ähnlich mit Lichtschranken ausgestattet ist, wie oben für die Regalgasse 14 beschrieben (Bezugszeichen mit Beistrich).

Die Ausgangssignale der verschiedenen Überwachungsschaltungen 60, 60′ usw. werden durch ein ODER-Glied 62 zusammengefaßt, welches eine zusätzliche, in einem zentralen Leitraum des Lagers angeordnete Alarmeinheit 64 ansteuert (die Alarmeinheit 56 ist räumlich in der Regalgasse 14 angeordnet).

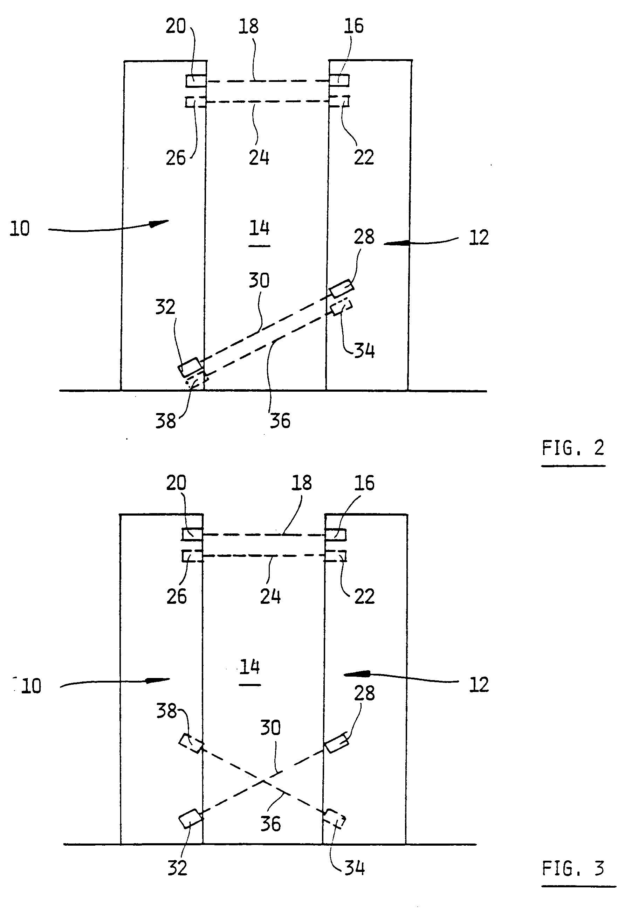

Bei der abgewandelten Überwachungseinrichtung nach Figur 2 verlaufen die unteren Lichtstrahlen 30, 36 in einer vertikalen Ebene schräg geneigt parallel zueinander. Beim Ausführungsbeispiel nach Figur 3 sind die Lichtstrahlen 30 und 36 entgegengesetzt geneigt und schneiden sich bei der Gassenmitte.

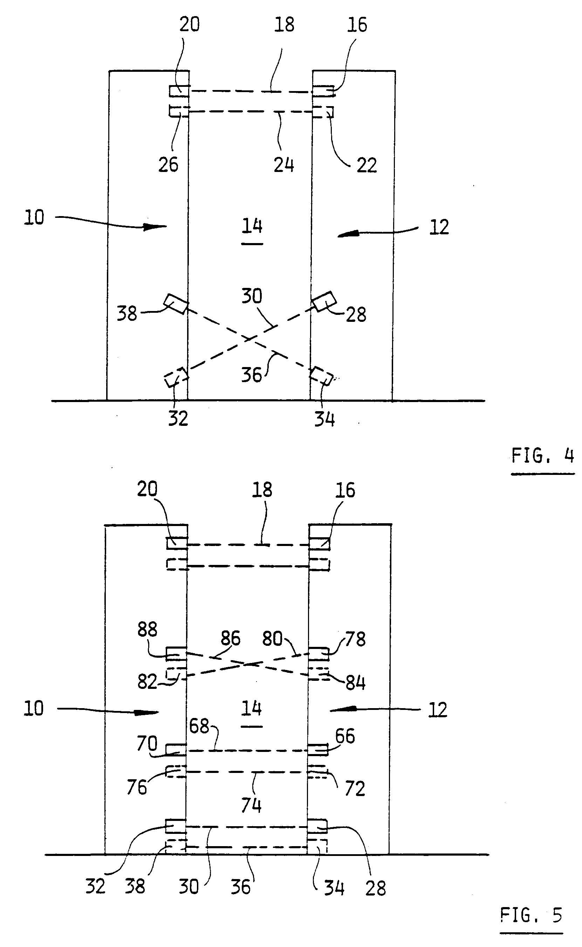

Beim Ausführungsbeispiel nach Figur 4 sind die Lichtstrahlen 30 und 36 zugleich in zur Zeichenebene senkrechter Richtung geneigt. Durch zwei nebeneinander die Regalgasse betretende Personen oder zwei gleichzeitig nebeneinander die Regalgasse verlassende Personen werden somit die beiden Lichtstrahlen 30, 36 exakt gleichzeitig unterbrochen, und der Überwachungskreis 54 kann diesen Sachverhalt unterscheiden von der aufeinanderfolgenden Unterbrechnung der Lichtstrahlen 30, 36, wie sie eine einzelne Person verursacht.

Beim Ausführungsbeispiel nach Figur 5 sind die unteren Lichtstrahlen 30, 36 in unmittelbare Nähe des Bodens der Regalgasse gerückt, befinden sich z.B. 5 cm über dem Boden. Zusätzlich ist eine mittlere Lichtschrankenanordnung in einer Höhe von etwa 80 cm vorgesehen, welche die Sendeeinheit 66, den von dieser erzeugten Lichtstrahl 68, die zugehörige Empfängereinheit 70 sowie die Sendeeinheit 72, den von dieser erzeugten Lichtstrahl 74 und die zugehörige Empfängereinheit 76 umfaßt.

Eine vierte Lichtschrankenanordnung ist in einer Höhe von etwa 1,55 m vorgesehen und umfaßt analog eine Sendeeinheit 78, den von dieser erzeugten Lichtstrahl 80, die zugehörige Empfängereinheit 82 sowie eine Sendeeinheit 84, den von dieser erzeugten Lichtstrahl 86 und eine zugeordnete Empfängereinheit 88. Die Lichtstrahlen 80, 86 haben wieder eine senkrecht zur Zeichenebene verlaufende Kompononte, kreuzen sich also auch in Aufsicht gesehen, sodaß man gerade im Hals- oder Kopfbereich (je nach Größe der Personen) eine deutliche Auflösung nebeneinander gehender Personen erhält.

Die zusätzlichen Lichtschrankenanordnungen sind wieder mit zugehörigen Signalverarbeitungskreisen und zugeordneten Auf/Ab-Zählern verbunden. Die Ausgänge dieser Auf/Ab-Zähler sind zusätzlich mit dem Überwachungskreis 54 verbunden. Dieser kann somit eine noch feinere Auflösung der Höhe der passierenden Objekte vornehmen und damit zusätzlich unterscheiden zwischen einer Person und von einer Person getragenen Gegenständen bzw. von einer Person geschobenen Kommissionierwagen.

Bei den oben beschriebenen Ausführungsbeispielen war für die Zwecke der Beschreibung der Einfachheit halber angenommen worden, daß die Regalgasse 14 am hinteren Ende durch eine Mauer oder dergleichen verschlossen ist. Falls die Regalgasse am hinteren Ende oder an einer seitlichen Stelle ebenfalls betreten oder verlassen werden kann, sind dort analoge Lichtschrankenanordnungen vorgesehen, wie bei dem in Figur 1 gezeigten Ende. Diesen Lichtschrankenanordnungen sind dann jeweils Signalverarbeitungskreise zugeordnet, wie die in Figur 1 mit 46 und 48 bezeichneten Signalverarbeitungskreise. Die Ausgangssignale der den hinteren und/ oder seitlichen weiteren Lichtschrankenanordnungen zugeordneten Signalverarbeitungskreise können entweder auf ihnen zugeordnete getrennte Auf/Ab-Zähler gegeben werden, die dann ebenfalls mit dem Überwachungskreis 54 verbunden werden, der dann durch Vergleich der verschiedenen Zählerstände die Anzahl von Objekten, Personen und Regalfahrzeugen ermittelt. Alternativ kann man die Ausgänge der Lichtschrankenanordnungen gleicher Höhe für das vordere und hintere Regalende und seitliche Zutritte jeweils über ein ODER-Glied zusammenfassen und auf einen einzigen dieser Überwachungshöhe zugeordneten Auf/Ab-Zähler geben.

Die Ausgangssignale der Auf/Ab-Zähler 50, 52 für die verschiedenen Regalgassen kann man auch dazu verwenden, den Regalfahrzeugen und den sich im Lager bewegenden Personen schon vorab anzuzeigen, welche Regalgassen sie betreten können und welche derzeit aus Sicherheitsgründen gesperrt sind.

Hierzu werden die Ausgangssignale der Auf/Ab-Zähler 50, 52 einer betrachteten Signalgasse zusätzlich auf Addierer 90, 92 gegeben. Der zweite Eingang des Addierers 92 erhält permanent ein Signal, welches der digitalen Darstellung der Zahl "1" entspricht. Der zweite Eingang des Addierers 90 ist über einen steuerbaren Schalter 94 mit dem Signal "1" beaufschlagt. Bei geschlossenem Schalter 94 erhält man somit an den Ausgängen der Addierer 90, 92 Zahlen, wie sie dem Stand der Auf/Ab-Zähler 50, 52 entsprechen würden, wenn sich ein weiteres Regalfahrzeug in die betrachtete Regalgasse hineinbewegt hat. Ist der Schalter 94 offen, so entsprechen die an den Ausgängen der Addierer 90, 92 erhaltenen Zahlen einem Zustand, der erhalten würde, wenn sich eine weitere Person in die betrachtete Regalgasse hineinbewegt hat. Die Ausgangssignale der Addierer 90, 92 werden auf einen Überwachungskreis 96 gegeben, der ähnlich aufgebaut ist wie der Überwachungskreis 54 und an seinem Ausgang dann ein Alarmsignal bereitstellt, wenn durch zusätzliches Einfahren eines Regalfahrzeuges (Schalter 94 geschlossen) oder zusätzliches Betreten der Regalgasse durch eine Person (Schalter 94 geöffnet) eine Alarmbedingung erhalten würde.

Die durch die Addierer 90, 92 und den Überwachungskreis 96 gebildete Überwachungsschaltung ist insgesamt mit 98 bezeichnet. Ihr Ausgangssignal wird ebenso wie die Ausgangssignale weiterer Überwachungsschaltungen 98′ und 98˝ für weitere Regalgassen auf Eingänge eines Leitrechners 100 gegeben. Dieser arbeitet mit einer Ein/Ausgabeeinheit 102 zusammen, an der die verschiedenen Kommissionierungsaufgaben eingegeben werden, ebenso die hierfür einzusetzenden Regalfahrzeuge und Personen.

Der Leitrechner 100 rechnet periodisch die betretbaren und gesperrten Regalgassen für die verschiedenen Regalfahrzeuge und Personen aus, wobei er den Schalter 94 entsprechend dem zu simulierenden Objekt öffnet (Person) oder schließt (Regalfahrzeug).

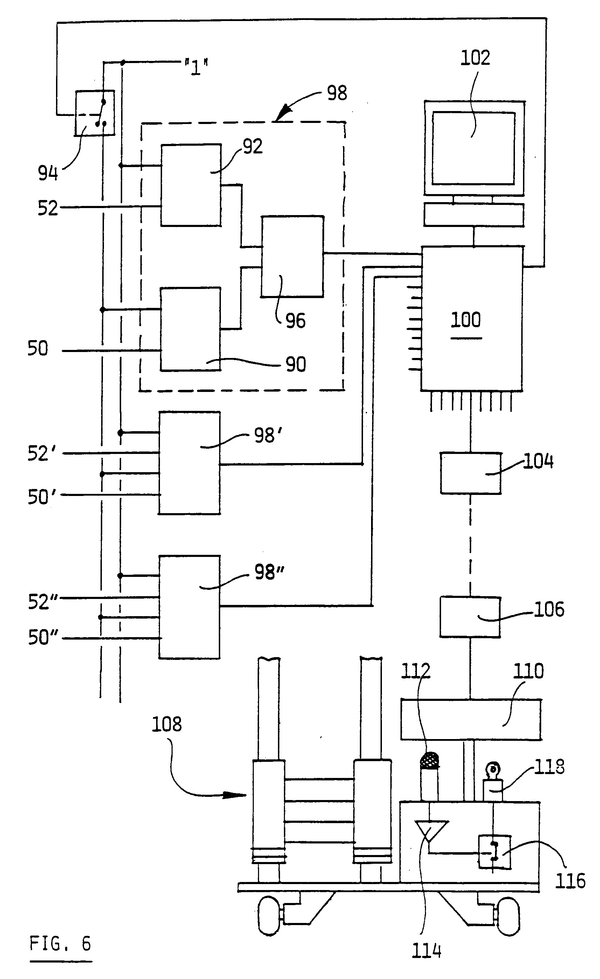

Der Leitrechner 100 hat für die Regalfahrzeuge und kommissionierenden Personen jeweils ein zugeordnetes ausgangsseitiges Modem 104, welches mit einem auf gleiche Frequenz eingestellten Modem 106 zusammenarbeitet, das die kommissionierende Person mit sich trägt oder das auf dem entsprechenden Regalfahrzeug angebracht ist. Ein solches ist in Figur 6 schematisch bei 108 angedeutet.

Das Modem 106 ist mit einer Anzeigeeinheit 110 verbunden. Über die Modems 104 und 106 stellt der Leitrechner 100 auf der Anzeigeeinheit 110 laufend dar, welche Regalstraßen derzeit aus Sicherheitsgründen gesperrt und welche zugänglich sind.

Der Leitrechner 100 kann ferner unter Berücksichtigung der derzeit frei zugänglichen Regalstraßen, der durchzuführenden Kommissionierungsarbeiten und der anderen Regalfahrzeugen und Personen schon übermittelten Instruktionen einen Fahrplan für eine kommissionierende Person oder ein Regalfahrzeug zusammenstellen, bei dem sich keine oder nur geringe Wartezeiten vor gesperrten Regalstraßen ergeben.

Wie Figur 6 zeigt, trägt das Regalfahrzeug 108 ferner ein Mikrophon 112, welches über einen Verstärker 114 einen steuerbaren normalerweise geschlossenen Nothaltschalter 116 öffnen kann, der in Reihe zum normalen Schlüsselschalter des Fahrzeuges geschaltet ist.

## Patentansprüche

1. Überwachungseinrichtung für eine Regalgasse mit Lichtschrankenanordnungen, dadurch gekennzeichnet, daß bei jedem zugänglichen Ende der Regalgasse mindestens zwei Lichtschrankenanordnungen (16 bis 26, 28 bis 38) vorgesehen sind, die in unterschiedlicher Höhe angeordnet sind und der Bewegungsrichtung sie unterbrechender Objekte zugeordnete Ausgangssignale bereitstellen; daß mit den Ausgangssignalen der Lichtschrankenanordnungen (16 bis 26, 28 bis 38) jeweils ein zugeordneter Auf/Ab-Zähler (50, 52) beaufschlagt ist und daß ein Überwachungskreis (54) an die Ausgänge der Auf/Ab-Zähler (50, 52) angeschlossen ist und immer dann ein Alarmsignal bereitstellt, wenn von ihm eine vorgegebene Kombination der Stände der beiden Auf/Ab-Zähler (50, 52) festgestellt wird.

2. Überwachungseinrichtung nach Anspruch 1, dadurch gekennzeichnet, daß mindestens eine Lichtschrankenanordnung (28 bis 38) zwei in einer vertikalen Ebene zur Vertikalen geneigte Lichtstrahlen (30, 36) aufweist.

3. Überwachungseinrichtung nach Anspruch 2, dadurch gekennzeichnet, daß die beiden Lichtstrahlen (30, 38) der mindestens einer Lichtschrankenanordnung (28 bis 38) in entgegengesetzter Richtung zur Vertikalen geneigt sind.

4. Überwachungseinrichtung nach einem der Ansprüche 1 bis 3, dadurch gekennzeichnet, daß die beiden Lichtstrahlen (30, 38) mindestens einer Lichtschrankenanordnung (28 bis 38) zur Mittelebene der Regalgasse (14) geneigt verlaufen.

5. Überwachungseinrichtung nach einem der Ansprüche 1 bis 4, dadurch gekennzeichnet, daß die untere Lichtschrankenanordnung (28 bis 38) dem Boden der Regalgasse (14) unmittelbar benachbart ist und eine zusätzliche, dritte Lichtschrankenanordnung (66 bis 76) in mittlerer Höhe vorgesehen ist.

6. Überwachungseinrichtung nach Anspruch 5, dadurch gekennzeichnet, daß eine vierte Lichtschrankenanordnung (78 bis 88) in einer Höhe vorgesehen ist, die zwischen der oberen Lichtschrankenanordnung (16 bis 26) und der dritten Lichtschrankenanordnung (66 bis 76) liegt.

7. Überwachungseinrichtung nach einem der Ansprüche 1 bis 6, dadurch gekennzeichnet, daß durch den Überwachungskreis (54) eine akustische Alarmeinheit (56) angesteuert wird.

8. Überwachungseinrichtung nach einem der Ansprüche 1 bis 7, gekennzeichnet durch einen dem Überwachungskreis (54) zugeordneten Rückstellschalter (58), der nur autorisiert, z.B. durch einen Schlüssel, betätigbar ist.

9. Überwachungseinrichtung nach einem der Ansprüche 1 bis 8, dadurch gekennzeichnet, daß für eine Mehrzahl von Regalgassen (14, 14′) jeweils entsprechende Lichtschrankenanordnungen und Überwachungsschaltungen (60, 60′) vorgesehen sind und die verschiedenen Überwachungsschaltungen (60, 60′) über ein ODER-Glied (62) eine zentrale Alarmeinheit (64) ansteuern.

10. Überwachungseinrichtung nach einem der Ansprüche 7 bis 9, dadurch gekennzeichnet, daß Regalfahrzeuge mit einem auf die Signale der akustischen Alarmeinheit (56) ansprechenden Mikrofon (112) versehen sind, dessen Ausgangssignal zum Abschalten sämtlicher Bewegungsfunktionen des Regalfahrzeuges verwendet wird.

11. Überwachungseinrichtung nach einem der Ansprüche 1 bis 10, wobei die sich in den Regalkreisen bewegenden Objekte mit Anzeigeeinrichtungen (110) versehen sind, auf welchen von einem Leitrechner (100) bereitgestellte Fahrbefehle dargestellt werden, dadurch gekennzeichnet, daß Eingänge des Leitrechners (100) mit den Ausgängen von Überwachungsschaltungen (98) verbunden sind, die eingangsseitig die Zählerstände der Auf/Ab-Zähler (50, 52) erhalten und dann ein voreilendes Alarmsignal erzeugen, wenn das Betreten der betrachteten Regalgasse durch das betrachtete Objekt einen unzulässigen Zustand herbeiführen würden, und daß der Leitrechner (100) Information über die derzeit betretbaren und/oder gesperrten Regalgassen an die Anzeigeeinrichtungen (110) der Objekte überstellt.

12. Überwachungseinrichtung nach Anspruch 11, dadurch gekennzeichnet, daß der Leitrechner (100) Fahrpläne für die bewegten Objekte unter Berücksichtigung der zulässig betretbaren Regalgassen berechnet und jeweils den Fahrplan für ein betrachtetes Objekt auf dessen Anzeigeeinrichtung (110) darstellt.

## Claims

1. Monitoring device for a shelf unit aisle having light barrier arrangements, characterised in that there are provided at each accessible end of the shelf unit aisle at least two light barrier arrangements (16 to 26, 28 to 38) which are arranged at different heights and supply output signals associated with the direction of movement of objects interrupting them; the output signals of the light barrier arrangements (16 to 26, 28 to 38) are applied to a respective associated up/down counter (50, 52) and a monitoring circuit (54) is connected to the outputs of the up/down counters (50, 52) and supplies an alarm signal whenever a predetermined combination of the counts of the two up/down counters (50, 52) is detected by it.

2. Monitoring device according to claim 1, characterised in that at least one light barrier arrangement (28 to 38) comprises two light beams (30, 36) inclined to the vertical in one vertical plane.

3. Monitoring device according to claim 2, characterised in that the two light beams (30, 38) of the at least one light barrier arrangement (28 to 38) are inclined to the vertical in opposite directions.

4. Monitoring device according to any one of claims 1 to 3, characterised in that the two light beams (30, 38) of at least one light barrier arrangement (28 to 38) extend at an angle to the middle plane of the shelf unit aisle (14).

5. Monitoring device according to any one of claims 1 to 4, characterised in that the lower light barrier arrangement (28 to 38) is immediately adjacent to the floor of the shelf unit aisle (14), and an additional, third light barrier arrangement (66 to 76) is provided at middle height.

6. Monitoring device according to claim 5, characterised in that a fourth light barrier arrangement (78 to 88) is provided at a height that lies between the upper light barrier arrangement (16 to 26) and the third light barrier arrangement (66 to 76).

7. Monitoring device according to any one of claims 1 to 6, characterised in that an acoustic alarm unit (56) is activated by the monitoring circuit (54).

8. Monitoring device according to any one of claims 1 to 7, characterised by a re-set switch (58) that is associated with the monitoring circuit (54) and that can be operated only with authorization, for example by a key.

9. Monitoring device according to any one of claims 1 to 8, characterised in that for a plurality of shelf unit aisles (14, 14′) respective light barrier arrangements and monitoring circuits (60, 60′) are provided and the various monitoring circuits (60, 60′) activate a central alarm unit (64) by way of an OR element (62).

10. Monitoring device according to any one of claims 7 to 9, characterised in that the shelf unit vehicles are provided with a microphone (112) that responds to the signals of the acoustic alarm unit (56) and the output signal of which is used to switch off all the movement functions of the shelf unit vehicle.

11. Monitoring device according to any one of claims 1 to 10, wherein the objects moving in the shelf unit circuits are provided with display devices (110) on which driving commands provided by a master computer (100) are displayed, characterised in that the inputs of the master computer (100) are connected to the outputs of the monitoring circuits (98) which receive at their inputs the counts of the up/down counters (50, 52) and then produce an advance alarm signal if the entry of the object considered into the shelf unit aisle considered would cause an inadmissible condition, and the master computer (100) transmits to the display units (100) of the objects information on which shelf unit aisles currently can be entered and/or are closed.

12. Monitoring device according to claim 11, characterised in that the master computer (100) computes schedules for the moved objects in consideration of the shelf unit aisles that it is permissible to enter, and displays the respective schedule for an object considered on its display device (110).

## Revendications

1. Dispositif de surveillance pour une allée de rayonnages comportant des dispositions de barrières lumineuses, caractérisé en ce qu'à chaque extrémité d'accès de l'allée de rayonnages sont prévues au moins deux dispositions de barrières lumineuses (16 à 26, 28 à 38) qui sont placées à différentes hauteurs et qui fournissent des signaux de sortie associés au sens de déplacement des objets qui les interrompent, en ce que les signaux de sortie des dispositions de barrières lumineuses (16 à 26, 28 à 38) sollicitent chaque fois un compteur additionneur/soustracteur (50, 52) qui leur est associé, et en ce qu'un circuit de surveillance (54) est relié aux sorties des compteurs additionneurs/soustracteurs (50, 52) et émet toujours un signal d'alerte lorsqu'une combinaison préalablement définie des cotes des deux compteurs additionneurs/soustracteurs (50, 52) est atteinte.

2. Dispositif de surveillance selon la revendication 1, caractérisé en ce qu'au moins une disposition de barrières lumineuses (28 à 38) présente deux rayons lumineux (30, 36) inclinés dans un plan vertical par rapport à la verticale.

3. Dispositif de surveillance selon la revendication 2, caractérisé en ce que les deux rayons lumineux (30, 36) d'au moins l'une (28 à 38) des dispositions de barrières lumineuses sont inclinés dans des directions opposées par rapport à la verticale.

4. Dispositif de surveillance selon l'une des revendications 1 à 3, caractérisé en ce que les deux rayons lumineux (30, 36) d'au moins une disposition de barrières lumineuses (28 à 38) s'étendent de façon inclinée par rapport au plan médian de l'allée de rayonnages (14).

5. Dispositif de surveillance selon l'une des revendications 1 à 4, caractérisé en ce que la disposition de barrières lumineuses inférieure (28 à 38) est directement adjacente au sol de l'allée de rayonnages (14) et en ce qu'une troisième disposition de barrières lumineuses (66 à 76) est en outre prévue à mi-hauteur.

6. Dispositif de surveillance selon la revendication 5, caractérisé en ce qu'une quatrième disposition de barrières lumineuses (78 à 88) est prévue à une hauteur qui est située entre la disposition de barrières lumineuses supérieure (16 à 26) et la troisième disposition de barrières lumineuses (66 à 76).

7. Dispositif de surveillance selon l'une des revendications 1 à 6, caractérisé en ce que le circuit de surveillance (54) actionne une unité d'alerte acoustique (56).

8. Dispositif de surveillance selon l'une des revendications 1 à 7, caractérisé par un interrupteur de remise à l'état initial (58) associé au circuit de surveillance (54), qui ne peut être actionné que par une personne autorisée, par ex. au moyen d'une clé.

9. Dispositif de surveillance selon l'une des revendications 1 à 8, caractérisé en ce que des dispositions de barrières lumineuses et des circuits de surveillance correspondants (60, 60′) sont chaque fois prévus pour plusieurs allées de rayonnages (14, 14′), et en ce que les différents circuits de surveillance (60, 60′) actionnent une unité d'alerte centrale (64) par le biais d'un opérateur OU (62).

10. Dispositif de surveillance selon l'une des revendications 7 à 9, caractérisé en ce que des transélévateurs sont munis d'un microphone (112) réagissant aux signaux de l'unité d'alerte acoustique (56), dont le signal de sortie est utilisé pour couper toutes les fonctions de déplacement du transélévateur.

11. Dispositif de surveillance selon l'une des revendications 1 à 10, sachant que les objets se déplaçant dans les allées sont munis de dispositifs d'affichage (110) sur lesquels sont représentés des ordres de déplacement fournis par un ordinateur pilote (100), caractérisé en ce quedes entrées de l'ordinateur pilote (100) sont reliées aux sorties de circuits de surveillance (98) qui reçoivent à l'entrée les cotes des compteurs additionneurs/soustracteurs (50, 52) et qui produisent un signal d'alerte lorsque l'accession de l'objet considéré dans l'allée de rayonnages considérée engendrerait une situation interdite, et en ce que l'ordinateur pilote (100) transmet aux dispositifs d'affichage (110) des informations concernant les allées de rayonnages actuellement accessibles et/ou barrées.

12. Dispositif de surveillance selon la revendication 11, caractérisé en ce que l'ordinateur pilote (100) établit des plannings pour les objets déplacés en tenant compte des allées de rayonnages dont l'accès est autorisé et affiche le planning pour un objet considéré sur le dispositif d'affichage (110) de ce dernier.
